# EUROPÄISCHE PATENTSCHRIFT

(11) **EP 1 856 701 B1**
(45) Veröffentlichungstag und Bekanntmachung des Hinweises auf die Patenterteilung: **13.06.2012**
(21) Anmeldenummer: 05735315.3
(22) Anmeldetag: 16.03.2005
(51) Int. Cl.: G01N 22/00

(54) **RASTERNAHFELDMIKROSKOP IM MIKROWELLEN- UND TERAHERTZBEREICH MIT AUF DER MESSSPITZE INTEGRIERTER SIGNALVERARBEITUNGSEINRICHTUNG**
RASTER NEAR FIELD MICROSCOPY IN THE MICROWAVE AND TERAHERTZ RANGES WITH A SIGNAL PROCESSING DEVICE INTEGRATED IN THE MEASURING TIP
MICROSCOPE A CHAMP PROCHE A BALAYAGE DANS LA PLAGE DE FREQUENCE MICROONDE ET TERAHERTZ, DOTE D'UN DISPOSITIF DE TRAITEMENT DES SIGNAUX INTEGRE A LA POINTE DE MESURE

(30) Priorität: 03.03.2005 DE 102005010363
(43) Veröffentlichungstag der Anmeldung: 21.11.2007
(73) Patentinhaber: Technische Universität Braunschweig, 38106 Braunschweig (DE)
(72) Erfinder: SCHILLING, Meinhard, 38302 Wolfenbüttel (DE); KAESTNER, Andre, 93049 Regensburg (DE); STEWING, Felix, 38114 Braunschweig (DE)
(74) Vertreter: Gerstein, Hans Joachim
(86) Internationale Anmeldenummer: PCT/DE2005/000473
(87) Internationale Veröffentlichungsnummer: WO 2006/092109

(56) Entgegenhaltungen:
- JP-A- 2003 287 522
- US-A- 5 231 349
- US-A- 5 442 300
- US-A- 5 488 305
- US-A- 5 936 237
- US-B1- 6 169 410
- ROSNERB T ET AL: "High-frequency near field microscopy" REVIEW OF SCIENTIFIC INSTRUMENTS, AMERICAN INSTITUTE OF PHYSICS. NEW YORK, US, Bd. 73, Nr. 7, Juli 2002 (2002-07), Seiten 2505-2525, XP002242021 ISSN: 0034-6748
- KAESTNER A ET AL: "YBA2CU3O7 JOSEPHSON JUNCTIONS ON LAALO3 BICRYSTALS FOR TERAHERTZ-FREQUENCY APPLICATIONS" APPLIED PHYSICS LETTERS, AMERICAN INSTITUTE OF PHYSICS. NEW YORK, US, Bd. 77, Nr. 19, 6. November 2000 (2000-11-06), Seiten 3057-3059, XP000970269 ISSN: 0003-6951
- BLACK R C ET AL: "High-frequency magnetic microscopy using a high-Tc SQUID", IEEE TRANSACTIONS ON APPLIED SUPERCONDUCTIVITY USA, vol. 5, no. 2, June 1995 (1995-06), pages 2137-2141, ISSN: 1051-8223
- SCHILLING M ET AL: "Room temperature near-field microwave imaging with an YBa2Cu3O7 Josephson cantilever", APPLIED PHYSICS LETTERS, AIP, AMERICAN INSTITUTE OF PHYSICS, MELVILLE, NY, US, vol. 88, no. 25, 21 June 2006 (2006-06-21) , pages 252507-252507, XP012082246, ISSN: 0003-6951, DOI: 10.1063/1.2214152
- CHATRAPHORN S ET AL: "Microwave electric-field imaging using a high-Tc scanning superconducting quantum interference device", APPLIED PHYSICS LETTERS, AIP, AMERICAN INSTITUTE OF PHYSICS, MELVILLE, NY, US, vol. 73, no. 7, 17 August 1998 (1998-08-17), pages 984-986, XP012021982, ISSN: 0003-6951, DOI: 10.1063/1.122060
- LI J ET AL: "Rf-induced dc voltages across unbiased terminals and current-voltage characteristics of microwave-driven high-Tc SQUIDs", SUPERCONDUCTOR SCIENCE & TECHNOLOGY IOP PUBLISHING UK, vol. 15, no. 2, February 2002 (2002-02), pages 226-229, ISSN: 0953-2048
- HEINZ E ET AL: "Microwave-induced steps in Josephson junctions, DC-SQUIDs and parallel arrays", JOURNAL OF LOW TEMPERATURE PHYSICS PLENUM USA, vol. 106, no. 3-4, February 1997 (1997-02) , pages 233-242, ISSN: 0022-2291
- SZE S.M.: 'Physics of semiconductor devices', 1981, JOHN WILEY & SONS, US Seiten 683 - 683
- C. BRENDEL, F. STEWING, M. SCHILLING: 'Terahertz-Mikroskopie mit supraleitenden Sensoren', [Online] 25 Juni 2007, Institut für elektrische Messtechnik und Grundlagen der Elektrotechnik TU Braunschweig Gefunden im Internet: <URL:https://www.tu-braunschweig.de/Medien- DB/iot/brendel-schilling-emg.pdf> [gefunden am 2011-07-00]
- VEAUVY C ET AL: "Scanning [mu]-superconduction quantum interference device force microscope", REVIEW OF SCIENTIFIC INSTRUMENTS AIP USA, vol. 73, no. 11, November 2002 (2002-11), pages 3825-3830, ISSN: 0034-6748
- RICHARDS P.L.: 'THE JOSEPHSON JUNCTION AS A DETECTOR OF MICROWAVE AND FAR INFRARED RADIATION', [Online] 1974, Seiten 1 - 35 Departement of Physics and Inorganic Materials Research Division, and Lawrence Radiation Laboratory, University of California, Berkley Gefunden im Internet: <URL:http://socrates.berkeley.edu/~phylabs/ adv/ReprintsPDF/JOS%20Reprints/06%20-%20The %20Josephson%20Junction%20as%20%20a%20Detec tor.pdf> [gefunden am 2011-07-00]
- YOSHINAO MIZUGAKI ET AL: "Magnetically Enhanced Terahertz Response of Josephson Junctions", IEEE TRANSACTIONS ON APPLIED SUPERCONDUCTIVITY, IEEE SERVICE CENTER, LOS ALAMITOS, CA, US, vol. 9, no. 4, 1 December 1999 (1999-12-01), XP011006009, ISSN: 1051-8223
- "Microwave microscopy using a superconducting quantuminterference device", APPLIED PHYSICS LETTERS, AIP, AMERICAN INSTITUTE OF PHYSICS, MELVILLE, NY, US, vol. 66, no. 1, 2 January 1995 (1995-01-02), pages 99-101, XP012012287, ISSN: 0003-6951, DOI: 10.1063/1.114159
- BRENDEL C ET AL: "HTS Josephson Junction Cantilever With Integrated Near Field THz Antenna", IEEE TRANSACTIONS ON APPLIED SUPERCONDUCTIVITY IEEE USA, vol. 21, no. 3, June 2011 (2011-06), pages 319-322, ISSN: 1051-8223

## Beschreibung

Die Erfindung betrifft einen abbildenden Mikrowellen-Prober zur dreidimensionalen Untersuchung von integrierten mikroelektronischen Schaltungen mit mindestens einer Messspitze an einem Messarm, wobei mindestens eine der Messspitzen eine Antenne zur Detektion elektromagnetischer Signale trägt und die Messspitze im Nahfeld wesentlich kleiner als die Wellenlänge der elektromagnetischen Signale ist, mit einer Positioniereinrichtung zur Positionierung eines zu vermessenden Objektes relativ zu der Messspitze in mindestens einer Messebene, mit einer mit der Antenne elektrisch verbundenen Signalverarbeitungseinrichtung zur Umwandlung des Sensorsignals der Antenne in ein Messsignal mit zur Auswertung geeigneter reduzierter Frequenz.

Aus der DE 101 58 096 A1 ist ein SQUID-Mikroskop für Raumtemperaturproben beschrieben, bei dem eine geschlossene Leiterbahn mit einem Josephson-Kontakt über eine Kante eines Substrats geführt wird. Damit kann der Abstand zwischen der Probe und der Mikroskopspitze mit dem SQUID reduziert werden.

Weiterhin ist aus der DE 195 20 457 C2 ein Rasterkraft-Mikroskop mit einem Messfühler bekannt, der einen Tunnelkontakt an dem Ende eines Hebelarms hat. Der Tunnelkontakt kann beispielsweise als Josephson-Tunnelkontakt ausgeführt sein.

Weiterhin sind optische Nahfeldmikroskope, auch SNOM genannt, beispielsweise aus dem US-Patent 6,545,276 B1 und der JP 2004 132711 bekannt, bei denen eine Probe mit einer Messspitze beleuchtet wird, die schmaler als die

Wellenlänge des emittierten Lichts ist. Die Auswertung erfolgt mit einem optischen Nachweissystem.

Aus dem US-Patent 5,821,410 und dem US-Patent 5,900,618 sind Mikrowellen-Nahfeldmikroskope bekannt, bei denen Mikrowellenleistung von einem Mikrowellengenerator zu einer entfernt davon angeordneten Messspitze über eine Leitung übertragen und die reflektierte Welle ausgewertet wird.

In der JP 4264745 ist ein nicht abbildender Mikrowellen-Prober beschrieben, bei dem Mikrowellenleistung über eine Antenne an eine zu untersuchende Schaltung ausgekoppelt und von der Schaltung reflektierte Mikrowellenleitung durch die Antenne aufgenommen wird.

US 5,936,237 offenbart ein kombiniertes Abtastmikroskop zur Erfassung der Topographie und eines elektromagnetischen Feldes mit einem Cantilever und einer Messspitze. Auf den Cantilever sind Leitungs- und Schaltungsstrukturen aufgebracht.

US 5,488,305 offenbart ein Nahfeldmikroskop mit einem Cantilever und einer Messspitze und Filterstrukturen auf dem Cantilever.

US 5,442,300 beschreibt ebenfalls ein Mikroskop mit einem Cantilever und einer Messspitze, die elektrisch leitfähig ist.

B. T. Rosner, G. W. van der Weide: High-frequency near-field microscopy", in: Review of Scientific Instruments, Vol. 73, Nr. 7, Juli 2002, Seiten 2505 bis 2525, offenbart ein Nahfeldmikroskop mit einem Wellenleiter und Antennen enthaltenen Cantilever und einer Messspitze an dem Cantilever.

A. Kaestner, M. Volk, F. Ludwig, M. Schilling: YBa2Cu3O7 Josephson junctions on LaAlO3 bicrystals for terahertz-frequency applications" in: Applied Physics Letters, Vol. 77, Nr. 19, 06. November 2000, Seiten 3058 bis 3059, beschreibt Josephson-Kontakte zur Nutzung in Mischern und Detektoren.

JP2003287522 offenbart ein Squidmikroskop, bei dem der Squid auf den Mantelbereich der Stirnfläche am Ende eines Lichtwellenleiters aufgebracht ist. Der Kern des Lichtwellenleiters ist an der Stirnfläche zu einer Spitze ausgeformt, die nach Art eines Rasterkraftmikroskops zur Abstandkontrolle zwischen Lichtwellenleiterende und zu untersuchender Probe eingesetzt wird. In einem Ausführungsbeispiel in Paragraph [0040] wird der Abstand so geregelt, dass das detektierte Magnetfeld konstant bleibt. In Absatz [0038] ist offenbart, dass ein Josephsonkontakt auch zur Detektion von Mikrowellen eingesetzt werden kann.

US 5,231,349 offenbart ein Nahfeldmikroskop mit einem millimeterwellenaktiven Tastkopf, der neben einer Antennenstruktur Filterschaltungsstrukturen trägt.

US 6,169,410 B1 beschreibt einen Wafer-Tastkopf mit eingebautem Hochfrequenzumwandlungsmodul. Eine Probenspitze kann mit Schaltungen auf einem Wafer zum Testen eines Halbleiterwafers in Kontakt gebracht werden.

Das Problem der herkömmlichen Prober besteht darin, dass durch den leitungsgebundenen Transport des höchstfrequenten Messsignals von der Messspitze zu einer entfernt davon angeordneten Auswerteeinheit bzw. eines höchstfrequenten Sendesignals von einem entfernt von der Messspitze angeordneten Senders zur Messspitze die Signale durch die Leitungen und die Messumgebung stark beeinflusst werden. Das Problem stellt sich beispielsweise bei der Untersuchung von elektromagnetischen Signalen bis in den Terahertzbereich in Schaltungen, Mikrochips und sonstigen Proben.

Aufgabe der Erfindung ist es daher einen verbesserten abbildenden Mikrowellen-Prober zur dreidimensionalen Untersuchung von integrierten mikroelektronischen Schaltungen zu schaffen.

Die Aufgabe wird mit dem abbildenden Mikrowellen-Prober mit den Merkmalen des Anspruchs 1 gelöst.

Die Antenne hat mindestens einen Josephson-Kontakt, die Signalverarbeitungseinrichtung ist angrenzend an die Antenne auf der Messspitze integriert und eine Messsignal-Übertragungsstrecke für das Messsignal verläuft mit einer so gewählten Frequenz von der Signalverarbeitungseinrichtung zu einer von der Messspitze entfernt angeordneten Messeinheit, dass das Mess- und/oder Koppelsignal ohne wesentliche Störung durch die Messumgebung transportierbar ist.

Die Signalverarbeitungseinrichtung ist zum Auskoppeln zeitabhängiger elektromagnetischer Signale aus dem Objekt und zur Transformation der ausgekoppelten Signale in den Frequenzbereich zur Erfassung der Fraquenzäbhängigkeit der Signale ausgebildet. Damit kann das Abscannen eines gesamten Frequenzbereichs in einem Schritt erfolgen, ohne dass die Frequenzinformationen verloren gehen.

Die Signalverarbeitungseinrichtung und die zugeordnete mindestens eine Antenne sind sind auf einer Fläche von maximal 1 mm² integriert. Durch diese kleinen Strukturen ist eine Untersuchung des Objektes in Abhängigkeit von der Frequenz der genutzten elektromagnetischen Signale mit hoher Auflösung möglich, beispielsweise von weniger als 10 µm bei Frequenzen im THz-Bereich von 110 GHz bis 30 THz.

Der Josephson-Kontakt kann gleichzeitig für die Signalverarbeitungseinrichtung genutzt werden. Damit ist eine besonders kleine Integration bei hoher Auflösung und Messgenauigkeit möglich. Die Messaufnehmer-Spitze hat dabei einen Josephson-Kontakt in einer Regelschaltung im Kompensationsbetrieb, wobei der Mikrowellen-Prober zur Ermittlung weiterer Messgrößen, beispielsweise Temperatur, Magnetfeld, Topographie des Objektes, Abstand zwischen Objekt und Messspitze, aus den Regelsignalen der Signalverarbeitungseinrichtung ausgebildet ist. Damit wird ausgenutzt, dass in dem Verhalten des Regelkreises für den Josephson-Kontakt beispielsweise eine Temperaturinformation steckt, die durch die Signalverarbeitungseinrichtung und/oder Messauswerteschaltung durch Auswerten des elektrischen Verhaltens des Regelkreises extrahiert werden kann.

Dadurch, dass die Signalverarbeitungseinrichtung auf der Messspitze integriert ist und bei der Detektion die Umwandlung des detektierten elektromagnetischen Signals in ein Messsignal durch die Signalverarbeitungseinrichtung unmittelbar an der Messspitze angrenzend an die Antenne durchgeführt wird, können auch höchstfrequente elektromagnetische Signale mit einer Ortsauflösung bis in den Submikrometerbereich im Nahfeld erfasst werden, da die Übertragung des ausgekoppelten Signals an eine externe Messeinheit mit reduzierter Frequenz erfolgt. Entsprechend erfolgt bei der Emission eine Erzeugung des hoch- bis höchstfrequenten elektromagnetischen Signals direkt in der Messspitze durch die Signalverarbeitungseinrichtung, die lediglich durch ein Koppelsignal mit reduzierter Frequenz angesteuert wird. Damit werden negative Einflüsse der Messumgebung durch Dämpfung und Übersprechen vermieden.

Durch die abbildende Eigenschaft des Probers ist es nunmehr möglich, Ersatzschaltbilder komplexer integrierter Schaltungen zu ermitteln, Defekte in realisierten Schaltungen zu finden und Modellrechnungen auch für die dreidimensionale Abstrahlung von Signalen zu überprüfen.

Die elektromagnetischen Signale liegen vorzugsweise im Frequenzbereich von 3 GHz bis 300 THz. Besonders bevorzugt ist es, wenn der Frequenzbereich bei mindestens 110 GHz beginnt. Die obere Grenze des Frequenzbereichs ist vorzugsweise maximal 30 THz und besonders bevorzugt maximal 3 THz.

Mindestens eine der Antennen ist als Messaufnehmer-Spitze zur Auskopplung elektromagnetischer Signale aus dem zu untersuchenden Objekt vorgesehen. Hierbei sollte die mindestens eine zugeordnete Signalverarbeitungseinrichtung als Empfänger zum Empfang elektromagnetischer Signale ausgebildet und mit der mindestens einen Antenne zur Auskopplung von elektromagnetischen Signalen aus dem zu untersuchenden Objekt elektrisch verbunden sein.

Zusätzlich kann mindestens eine der Antennen zur Einkopplung elektromagnetischer Signale in das zu untersuchende Objekt vorgesehen sein. Die Messung erfolgt dann in dem zu vermessenden Objekt selbst. Dabei sollten die zugeordneten Signalverarbeitungseinrichtungen als Sender zur Erzeugung elektromagnetischer Signale ausgebildet und mit dieser mindestens einen Antenne zur Einkopplung der erzeugten elektromagnetischen Signale in das zu untersuchende Objekt elektrisch verbunden sein.

Die Signalverarbeitungseinrichtungen haben vorzugsweise zur Ausbildung eines Senders bzw. Empfängers Signalverstärker und/oder einen Oszillator und/oder eine Modulationseinrichtung und/oder eine Anpassungsschaltung.

Es ist besonders vorteilhaft, wenn die Messaufnehmer-Spitzen richtungssensitiv zur Erfassung jeweils einer Feldkomponente des elektrischen oder magnetischen Feldes im Nahfeld des Objektes ausgebildet sind, so dass mit mindestens zwei und bevorzugt drei richtungssensitiven Messaufnehmer-Spitzen ein Vektorsensor realisiert werden kann.

Die Signalverarbeitungseinrichtung kann einen ansteuerbaren Referenzoszillator und einen mit dem Referenzoszillator elektrisch verbundenen Mischer haben, um das zu emittierende oder detektierende Signal hinsichtlich der Amplitude und/oder Phase des Signals in Referenz zu einem zeitlichen Referenzsignal des Referenzoszillators zu setzen. Der Mischer dient zum Heruntermischen des elektromagnetischen Signals in das Messsignal mit reduzierter Frequenz oder zum Hochmischen des Koppelsignals mit reduzierter Frequenz in das elektromagnetische Signal.

Der oben beschriebene Mikrowellen-Prober kann beispielsweise zur Reflexionsmessung, Emissionsmessung, Absorptionsmessung oder Transmissionsmessung genutzt werden. So kann z.B. bei der Reflexionsmessung nach dem Einkoppeln von Mikrowellenleistung in das zu vermessende Objekt das von der Antenne detektierte Signal hinsichtlich Amplitude, Phase und Frequenzspektrum gemessen werden.

Das Ein- und/oder Auskoppeln der elektromagnetischen Signale mit der Antenne kann im Wesentlichen kapazitiv, induktiv oder resistiv erfolgen. Da bei der Auskopplung immer auch die anderen Komponenten enthalten sind, d.h. beim kapazitiven Auskoppeln auch induktive und resistive Komponenten vorliegen, soll mit dem Begriff "im Wesentlichen" klargestellt werden, dass es vorwiegend auf die Hauptkomponente ankommen soll.

In der Messspitze kann auch mindestens ein Messaufnehmer zur Erfassung weiterer Messgrößen, beispielsweise Temperatur, Magnetfeld, Topographie des Objektes, Abstand zwischen Objekt und Messspitze, integriert sein. Die von dem Messaufnehmer aufgenommenen Messgrößen können dann zur Steuerung des Mikrowellen-Probers und zur Messdatenauswertung genutzt werden.

Störungen der Messumgebung und ggf des Messsignals können reduziert werden, wenn die Messspitze und ggf. der Messarm eine Abschirmung für elektrische und magnetische Störfelder hat.

Es ist vorteilhaft, wenn die Messspitze einen Kühler zum Abkühlen der Antenne hat Optional oder zusätzlich kann auch ein Kühler zum Abkühlen des Objektes vorgesehen sein. Als Kühler kann ein elektrischer Kleinkühler oder ein Kühler mit flüssigem Kühlmedium dienen. Weiterhin kann optional oder bevorzugt zusätzlich zum Kühler ein Heizelement in der Messspitze zum Erwärmen der Antenne und/oder eine Heizelement zum Erwärmen des Objektes vorgesehen sein. Der elektrische Kleinkühler oder das Heizelement kann beispielsweise ein Peltierelement haben. Damit können gerichtete Wärmeströme erzwungen werden.

Die Mess-/Koppelsignal-Übertragungsstrecke kann leitungsgebunden, beispielsweise als elektrische Leitung oder optische Lichtleitfaser, oder nicht leitungsgebunden, beispielsweise als Funkübertragungsstrecke, zur Übertragung des Mess- und/oder Koppelsignals und/oder des Referenzsignals des Referenzoszillators ausgebildet sein.

Zur Steuerung des Mikrowellen-Probers ist es vorteilhaft, wenn dieser zur Erzeugung einer relativen mechanischen Schwingung zwischen dem zu vermessenden Objekt und der Messspitze für die Annäherung von Objekt und Messspitze und Detektion des Abstands zwischen Objekt und Messspitze in Abhängigkeit von der Dämpfung der Schwingung ausgebildet ist.

Die Annäherung der Messspitze an das Objekt kann aber auch durch Ermittlung des Abstands zwischen Objekt und Messspitze aus den detektierten oder emittierten elektromagnetischen Signalen der zugeordneten Signalverarbeitungseinrichtung erfolgen, aus denen Steuerungssignale zur Annäherung der Messspitze an das Objekt generiert werden.

Die Erfindung wird nachfolgend anhand der beigefügten Zeichnungen beispielhaft näher erläutert. Es zeigen:
- Figur 1 -: Schematische Querschnittsansicht des abbildenden Mikrowellen-Rastermikroskops mit in die Messspitze integriertem Sensor und Detektorschaltung;
- Figur 2 -: Schematische Ausschnittsansicht der Messspitze des Mikrowellen-Rastermikroskops aus Figur 1;
- Figur 3 -: Blockdiagramm einer als Sender arbeitenden Signalverarbeitungseinrichtung;
- Figur 4 -: Blockdiagramm einer als Empfänger arbeitenden Signalverarbeitungseinrichtung.

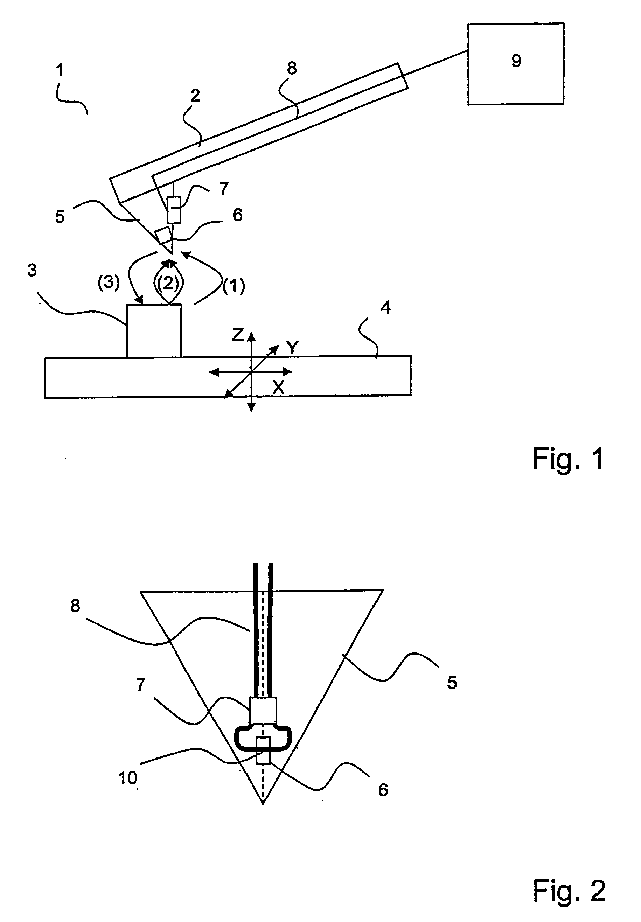

Die Figur 1 lässt eine Skizze eines abbildenden Mikrowellen-Probers 1 mit einem Messarm 2 erkennen. Der Messarm 2 erstreckt sich in Richtung eines zu vermessenden Objektes 3, das von einer verschiebbar gelagerten Halterung 4 mit Positioniereinrichtung zur Verschiebung des Objekts 3 in den drei kartesischen Raumdimensionen, das heißt die X-Y- und Z-Richtung, getragen ist. An dem zum Objekt 3 hin gerichteten Ende des Messarms 2 ist eine Messspitze 5 vorgesehen, die eine Antenne 6 zum im Wesentlichen kapazitiven, induktiven oder resistiven Ein- oder Auskoppeln elektromagnetischer Signale mit einer Frequenz bis in den Terahertzbereich hat, d.h. einem Frequenzbereich von 3 GHz bis 300 THz und vorzugsweise 110 GHz bis 30 THz.

Unmittelbar angrenzend an die Antenne 6 ist eine Signalverarbeitungseinrichtung 7 in die Messspitze 5 integriert und mit einer zugeordneten Antenne 6 elektrisch verbunden. Die Signalverarbeitungseinrichtung 7 ist als Empfänger ausgebildet, um das ausgekoppelte hoch- oder höchstfrequente Signal auf ein Messsignal mit reduzierter Frequenz herabzumischen. Für den Fall, dass die Messspitze 5 zur Emission elektromagnetischer Signale in das Objekt 3 vorgesehen ist, wird die Signalverarbeitungseinrichtung 7 als Sender ausgebildet, um ein Koppelsignal auf eine höhere Frequenz des elektromagnetischen Signals heraufzumischen. Das Mess- und/oder Koppelsignal wird über eine leitungsgebundene oder nicht leitungsgebundene Mess-/Koppelsignal-Übertragungsstrecke 8 zwischen der Messeinrichtung 9 und der Signalverarbeitungseinrichtung 7 übertragen. Die Übertragung kann beispielsweise mit einer elektrischen oder optischen Messleitung erfolgen, die an dem Messarm 2 entlang zu einer Messeinheit 9 geführt ist. Optional ist auch eine Funkübertragung des Mess-/Koppelsignals möglich, wobei auf die Messspitze 5 ein zusätzlicher Funksender/-empfänger zur Funkdatenkommunikation, beispielsweise nach dem Bluetooth-Standard, mit der Signalverarbeitungseinrichtung 7 integriert ist.

Durch die Reduzierung der Frequenz des Mess- und Koppelsignal und Integration des Senders / Empfängers direkt auf der Messspitze 5 wird ein Übersprechen des Mess- oder Koppelsignals auf die Messumgebung verhindert und eine weitgehend störungsfreie Weiterleitung des Mess- und Koppelsignals zwischen der Messspitze 5 und der entfernt davon angeordneten Messeinheit 9 gewährleistet.

Das Mess- oder Koppelsignal kann eine Schwingung, z.B. eine sinusförmige oder rechteckförmige Schwingung mit definierter Frequenz, ein Pulssignal mit festgelegter Pulsweite und Pulsfrequenz, ein CW-Signal (continuous wave) o. ä. sein. Auch ein Mischbetrieb mit Frequenzänderung, z. B. während der Pulse, ist möglich.

Für eine erste Messmethode (1) kann mit dem abbildenden Mikrowellen-Prober 1 höchstfrequente Mikrowellenleistung aus dem Objekt 3 mit einer Ortsauflösung im Nahfeld bis in den Submikrometerbereich ausgekoppelt und auf Grund der Umwandlung des ausgekoppelten elektromagnetischen Signals mit einer Frequenz im THz-Bereich in ein Messsignal mit reduzierter Frequenz durch die unmittelbar angrenzend an die Antenne 6 in der Messspitze 5 angeordnete Signalverarbeitungseinrichtung 7 ohne die herkömmlichen Probleme der Dämpfung und des Übersprechens an der relativ langen Mess-/Koppelsignal-Übertragungsstrecke 8 an die Messeinheit 9 übertragen werden.

In einer zweiten Messmethode (2) wird zunächst Mikrowellenleistung von der Antenne 6 in das Objekt 3 eingekoppelt und das resultierende Signal mit Hilfe dieser oder einer anderen Antenne 6, der zugeordneten Signalverarbeitungseinrichtung 7 und der Messeinheit 9 gemessen. Hierzu wird ein Koppelsignal von der Messeinheit 9 an die Signalverarbeitungseinrichtung 7 geleitet, das dort in das hoch- oder höchstfrequente zu emittierende elektromagnetische Signal umgewandelt wird. Die Detektion des resultierenden Signals erfolgt dann durch diese oder eine andere Antenne 6 des Mikrowellen-Probers 1 wie in der Methode (1). Auf Grund der ermittelten Dämpfung und Phase kann dann beispielsweise die Impedanz bestimmt werden.

Alternativ oder zusätzlich zu der verschiebbaren Halterung 4 kann die Positioniereinrichtung auch mit dem Messarm 2 gekoppelt sein, um diesen in mindestens einer Messebene zu verschieben. Durch die Positionierbarkeit des zu vermessenden Objektes 3 relativ zu der Messspitze in allen drei Raumdimensionen X, Y, Z wird die Aufnahme von dreidimensionalen Strahlungsverteilungen im Raum um und über dem Objekt 3 ermöglicht.

Ein Mischer der Signalverarbeitungseinrichtung 7 kann mit einem von einem Referenzoszillator vorgegebenen Referenzsignal angesteuert werden. Das zu detektierende oder emittierende Signal steht dann hinsichtlich der Amplitude und/oder Phase des Hochfrequenzsignals in Referenz zu dem zeitlichen Referenzsignal.

Die Figur 2 lässt einen Ausschnitt einer Messspitze 5 mit mindestens einem Josephson-Kontakt 10 erkennen, der die Antenne 6 sowie ggf. einen Teil der Signalverarbeitungseinrichtung 7 bildet. Der Josephson-Kontakt 10 befindet sich auf einer Nahtstelle zwischen zwei Kristallhälften der Messspitze 5. Die Größe der Antenne 6 beträgt etwa 1 µm x 1 µm. Die Signalverarbeitungseinrichtung 7 wird dann unmittelbar angrenzend hierzu in einem Abstand im µm-Bereich vorzugsweise 1 bis 100 µm an die Antenne 6 auf der Messspitze 5 integriert.

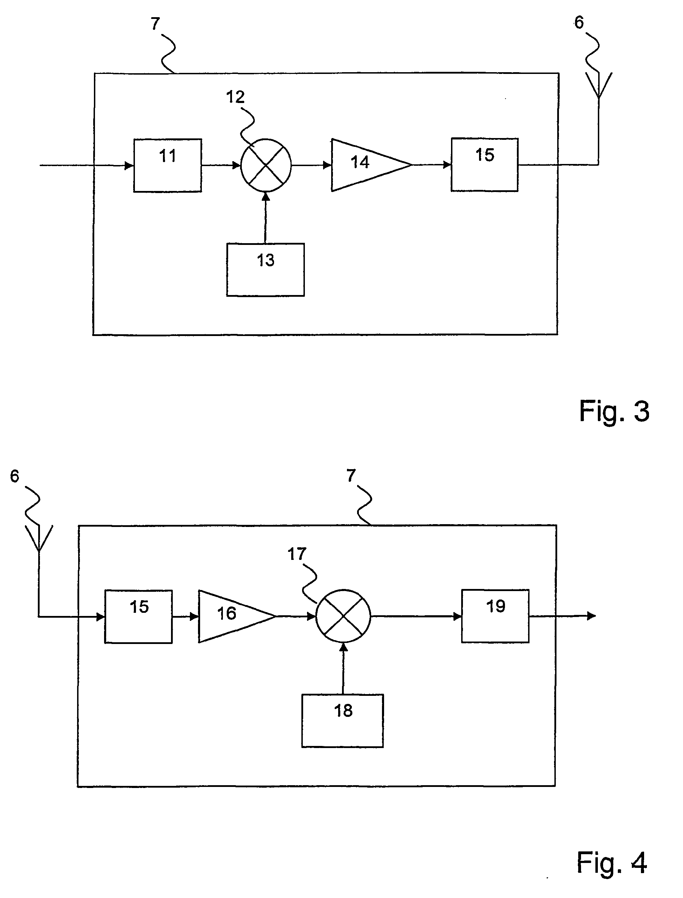

Die Figur 3 zeigt ein Blockschaltbild einer als Sender ausgebildeten Signalverarbeitungsvorrichtung 7. Es ist eine Anpassungsschaltung 11 am Eingang der Signalverarbeitungsvorrichtung 7 vorgesehen, um den Signalpegel des Koppelsignals und/oder die Impedanz der Mess-/Koppelsignal-Übertragungsstrecke 8 an die Signalverarbeitungsvorrichtung 7 anzupassen. Die Anpassungsschaltung 11 ist mit einem Mischer 12 verbunden, um das Koppelsignal auf eine höhere Frequenz vorzugsweise im oben genannten Terahertz-Frequenzbereich heraufzumischen. Hierzu wird der Mischer von einem Oszillator 13 angesteuert, der als Teil der Signalverarbeitungsvorrichtung 7 auf der Messspitze 5 integriert sein kann. Es ist aber auch denkbar, das Oszillatorsignal als Referenzsignal von außen der Messspitze zuzuführen, beispielsweise mit einem modulierten Laserstrahl. Das heraufgemischte elektromagnetische Signal wird über einen Verstärker 14 und eine Anpassungsschaltung 15 verstärkt der Antenne 6 zugeführt.

Die Figur 4 zeigt ein Blockschaltbild einer als Empfänger ausgebildeten Signalverarbeitungsvorrichtung 7. Es ist ein Verstärker 16 an dem mit der Antenne 6 elektrisch verbundenen Eingang der Signalverarbeitungsvorrichtung 7 vorgesehen, um das detektierte elektromagnetische Signal zu verstärken. Der Verstärker 16 ist mit einem Mischer 17 verbunden, um das verstärkte detektierte Signal vorzugsweise im oben genannten Terahertz-Frequenzbereich auf eine reduzierte Frequenz so weit herabzumischen, dass ein Übersprechen in der Messumgebung durch das herabgemischte Messsignal vermieden wird und eine Weiterleitung des Messsignals an eine externe Messeinheit 9 zur weiteren Signalauswertung möglich ist. Hierzu wird der Mischer 17 von einem Oszillator 18 angesteuert, der als Teil der Signalverarbeitungsvorrichtung 7 auf der Messspitze 5 integriert sein kann. Es ist aber auch denkbar, das Oszillatorsignal als Referenzsignal von außen der Messspitze zuzuführen, beispielsweise mit einem modulierten Laserstrahl. Das herabgemischte elektromagnetische Signal wird über ein Filter 19 als Messsignal an die externe Messeinheit 9 geleitet.

Die Signalverarbeitungsvorrichtung 7 Kann aber auch optional oder zusätzlich einen Analog-Digital-Wandler haben, um das detektierte oder emittierte elektromagnetische Signal in ein digitales Messsignal umzuwandeln.

Insbesondere ist mit dem Wissen der Chipstruktur (Topographie) eine ortsaufgelöste Verifikation von hochintegrierten Schaltungen möglich, die mit hohen und höchsten Frequenzen betrieben werden.

Die Annäherung der Messspitze 5 an das Objekt kann mit Hilfe der detektierten Messsignale gesteuert werden, insbesondere durch Auswertung der Dämpfung als Abstandssignal. In an sich bekannter Weise kann das Objekt 3 und/oder die Messspitze 5 in Schwingung versetzt werden, wobei die Annäherung von Objekt 3 und Messspitze 5 in Abhängigkeit von der beobachteten Dämpfung der Schwingung gesteuert wird. Denkbar ist aber auch eine optische Messung des Abstands bei der Annäherung von Objekt 3 und Messspitze 5 durch Interferenzmessung.

Bei der Untersuchung des Objekts 3 können neben den elektromagnetischen Signalen auch weitere Messgrößen in das Objekt 3 ein- und/oder ausgekoppelt werden, wie z.B. Magnetfelder, Wärmestrahlung etc. Dabei wird die Reaktion des Objektes 3 auf die eingekoppelten Messgrößen gemessen und ausgewertet.

## Patentansprüche

1. Abbildender Mikrowellen-Prober (1) zur dreidimensionalen Untersuchung von integrierten mikroelektronischen Schaltungen mit mindestens einer Messspitze (5) an einem Messarm (2), wobei mindestens eine der Messspitzen (5) eine Antenne (6) zur Detektion elektromagnetischer Signale trägt und die Messspitze im Nahfeld wesentlich kleiner als die Wellenlänge der elektromagnetischen Signale ist, einer Positioniereinrichtung zur Positionierung eines zu vermessenden Objektes (3) relativ zu der Messspitze (5) in mindestens einer Raumdimension (X, Y, Z), mit einer mit der Antenne (6) elektrisch verbundenen Signalverarbeitungseinrichtung (7) zur Umwandlung des Sensorsignals der Antenne (6) in ein Messsignal mit zur Auswertung geeigneter reduzierter Frequenz wobei die Antenne (6) mindestens einen Josephson-Kontakt (10) in einer Regelschaltung im Kompensationsbetrieb hat, die Signalverarbeitungseinrichtung (7) angrenzend an die Antenne (6) auf der Messspitze (5) integriert ist und eine Messsignalübertragungsstrecke (8) für das Messsignal mit einer so gewählten Frequenz von der Signalverarbeitungseinrichtung (7) zu einer von der Messspitze (5) entfernt angeordneten Messeinheit (9) verläuft, dass das Messsignal ohne wesentliche Störung durch die Messumgebung transportierbar ist und der Mikrowellen-Prober (1) zur Ermittlung weiterer Messgrößen, beispielsweise Temperatur, Magnetfeld, Topographie des Objektes (3), Abstand zwischen Objekt (3) und Messspitze (5), aus den Regelsignalen der Signalverarbeitungseinrichtung (7) ausgebildet ist, wobei die Signalverarbeitungseinrichtung (7) zum zeitabhängigen Auskoppeln elektromagnetischer Signale aus dem Objekt (3) ausgebildet ist und eine Transformation der ausgekoppelten Signale in den Frequenzbereich zur Erfassung der Frequenzabhängigkeit der Signale vorgesehen ist, und wobei die Signalverarbeitungseinrichtung (7) und die mindestens eine zugeordnete Antenne (6) auf einer Fläche von maximal 1 mm² integriert sind.

2. Abbildender Mikrowellen-Prober (1) nach Anspruch 1, **dadurch gekennzeichnet, dass** die elektromagnetischen Signale im Frequenzbereich von 3 GHz bis 300 THz liegen.

3. Abbildender Mikrowellen-Prober (1) nach Anspruch 2, **dadurch gekennzeichnet, dass** die elektromagnetischen Signale eine Frequenz von mindestens 110 GHz haben.

4. Abbildender Mikrowellen-Prober (1) nach Anspruch 2 oder 3, **dadurch gekennzeichnet, dass** die elektromagnetischen Signale eine Frequenz von maximal 30 THz oder maximal 3 THz haben.

5. Abbildender Mikrowellen-Prober (1) nach einem der vorhergehenden Ansprüche, ***d*adurch gekennzeichnet, dass** mindestens eine Antenne (6) als Messaufnehmer-Spitze zur Auskopplung elektromagnetischer Signale aus dem zu untersuchenden Objekt (3) ausgebildet ist.

6. Abbildender Mikrowellen-Prober (1) nach Anspruch 5, **dadurch gekennzeichnet, dass** Messaufnehmer-Spitzen richtungssensitiv zur Erfassung jeweils einer Feldkomponente des elektrischen oder magnetischen Feldes im Nahfeld des Objektes (3) ausgebildet sind.

7. Abbildender Mikrowellen-Prober (1) nach einem der vorhergehenden Ansprüche, **dadurch gekennzeichnet, dass** mindestens eine weitere Antenne (6) zur Einkopplung elektromagnetischer Signale in das zu untersuchende Objekt (3) ausgebildet ist.

8. Abbildender Mikrowellen-Prober (1) nach einem der vorhergehenden Ansprüche, **dadurch gekennzeichnet, dass** mindestens eine weitere Signalverarbeitungseinrichtung (7) als Sender zur Erzeugung elektromagnetischer Signale ausgebildet und mit mindestens eine weitere antenne (6) zur Einkopplung der erzeugten elektromagnetischen Signale in das zu untersuchende Objekt (3) elektrisch verbunden ist.

9. Abbildender Mikrowellen-Prober (1) nach einem der vorhergehenden Ansprüche, **dadurch gekennzeichnet, dass** die Signalverarbeitungseinrichtungen (7) Signalverstärker (16) und/oder einen Oszillator (13, 18) und/oder eine Modulationseinrichtung (12, 17) und/oder eine Anpassungsschaltung (11, 15, 19) haben.

10. Abbildender Mikrowellen-Prober (1) nach einem der vorhergehenden Ansprüche, **dadurch gekennzeichnet, dass** die Signalverarbeitungseinrichtungen (7) Mittel zur Detektion der Phase des detektierten Signals haben.

11. Abbildender Mikrowellen-Prober (1) nach Anspruch 7 oder 8, **dadurch gekennzeichnet, dass** die Signalverarbeitungseinrichtung (7) einen ansteuerbaren Referenzoszillator und einen mit dem Referenzoszillator elektrisch verbundenen Mischer hat, um das zu emittierende oder detektierende Signal hinsichtlich der Amplitude und/oder Phase des Signals in Referenz zu einem zeitlichen Referenzsignal des Referenzoszillators zu setzen.

12. Abbildender Mikrowellen-Prober (1) nach einem der vorhergehenden Ansprüche, **dadurch gekennzeichnet, dass** der Mikrowellen-Prober (1) zur Reflexionsmessung, Emissionsmessung, Absorptionsmessung oder Transmissionsmessung ausgebildet ist.

13. Abbildender Mikrowellen-Prober (1) nach einem der vorhergehenden Ansprüche, **dadurch gekennzeichnet, dass** die Antenne (6) zum im Wesentlichen kapazitiven, induktiven oder resistiven Ein- und/oder Auskoppeln der elektromagnetischen Signale ausgebildet ist.

14. Abbildender Mikrowellen-Prober (1) nach einem der vorhergehenden Ansprüche, **dadurch gekennzeichnet, dass** in der Messspitze (5) mindestens ein Messaufnehmer zur Erfassung weiterer Messgrößen, beispielsweise Temperatur, Magnetfeld, Topographie des Objektes (3), Abstand zwischen Objekt (3) und Messspitze (5) integriert ist.

15. Abbildender Mikrowellen-Prober (1) nach einem der vorhergehenden Ansprüche, **dadurch gekennzeichnet, dass** die Messspitze (5) und der Messarm (2) eine Abschirmung für elektrische und magnetische Störfelder hat.

16. Abbildender Mikrowellen-Prober (1) nach einem der vorhergehenden Ansprüche, **dadurch gekennzeichnet, dass** ein Kühler zum Abkühlen der Antenne (6) in der Messspitze (5) und/oder ein Kühler zum Abkühlen des Objektes (3) vorgesehen ist.

17. Abbildender Mikrowellen-Prober (1) nach einem der vorhergehenden Ansprüche, **dadurch gekennzeichnet, dass** ein Heizelement zum Erwärmen der Antenne (6) in der Messspitze (5) und/oder ein Heizelement zum Erwärmen des Objektes (3) vorgesehen ist.

18. Abbildender Mikrowellen-Prober (1) nach einem der vorhergehenden Ansprüche, **dadurch gekennzeichnet, dass** die Messsignalübertragungsstrecke (8) leitungsgebunden oder nicht leitungsgebunden zur Übertragung des Messsignals und/oder eines Referenzsignals eines Referenzoszillators ausgebildet ist.

19. Abbildender Mikrowellen-Prober (1) nach einem der vorhergehenden Ansprüche, **dadurch gekennzeichnet, dass** der Mikrowellen-Prober (1) zur Erzeugung einer relativen mechanischen Schwingung zwischen dem zu vermessenden Objekt (3) und der Messspitze (5), Annäherung von Objekt (3) und Messspitze (5) und Detektion des Abstands zwischen Objekt (3) und Messspitze (5) in Abhängigkeit von der Dämpfung der Schwingung ausgebildet ist.

20. Abbildender Mikrowellen-Prober (1) nach einem der vorhergehenden Ansprüche, **dadurch gekennzeichnet, dass** der Mikrowellen-Prober (1) zur Ermittlung des Abstands zwischen Objekt (3) und Messspitze (5) und von Steuerungssignalen zur Annäherung der Messspitze (5) an das Objekt (3) aus den detektierten oder emittierten elektromagnetischen Signalen der zugeordneten Signalverarbeitungseinrichtung (7) ausgebildet ist.

21. Verfahren zur Untersuchung von Objekten (3) mit einem abbildenden Mikrowellen-Prober (1) nach einem der vorhergehenden Ansprüche, **gekennzeichnet durch** Auswertung der detektierten Ist-Signale in Verbindung mit vorgegebenen Soll-Signalen und Darstellung der Abweichungen zwischen den detektierten Ist-Signalen und den vorgegebenen Soll-Signalen.

22. Verfahren nach Anspruch 21, **gekennzeichnet durch** Ermittlung der Soll-Signale mit Simulationsrechnungen auf der Basis bekannter oder **durch** Untersuchung ermittelter Modelle des zu untersuchenden Objektes (3).

23. Verfahren nach Anspruch 21 oder 22, **gekennzeichnet durch** Modellierung des zu untersuchenden Objektes (3) mit Hilfe einer skalaren oder vektoriellen Netzwerkanalyse, wobei eine Vielzahl ortsaufgelöster konzentrierter Ersatzschaltbilder ermittelt und überlagert werden.

24. Verfahren nach einem der Ansprüche 21 bis 23, **gekennzeichnet durch** Auswertung der detektierten Signale mit Hilfe einer quantitativen Mikroskopie der Impedanzen **durch** ortsaufgelöste Ermittlung des elektrischen und/oder magnetischen Verhaltens des Objektes (3), beispielsweise zur Ermittlung von Materialeigenschaften.

25. Verfahren nach einem der Ansprüche 21 bis 24, **gekennzeichnet durch** zusätzliches Einkoppeln von Laserlicht auf die Messspitze (5) zur Einkopplung von Energie und/oder von Referenzsignalen und/oder Einkoppeln von Laserlicht auf das Objekt (3) zur Reflexions- oder Transmissionsmessung.

## Claims

1. An imaging microwave probe (1) for three-dimensional examining of integrated microelectronic circuits with at least one measuring tip (5) on a measuring arm (2), wherein at least one of the measuring tips (5) carries an antenna (6) for detecting or emitting electromagnetic signals and the measuring tip is much smaller in the near field than the wavelength of the electromagnetic signals, with a positioning device for positioning an object (3) to be measured relative to the measuring tip (5) in at least one spatial dimension (X, Y, Z), with a signal processing device (7), electrically connected to the antenna (6), for converting the sensor signal of the antenna (6) into a measuring signal with a reduced frequency suitable for evaluation or for converting a coupling signal with reduced frequency into a signal to be emitted by the antenna (6), wherein the antenna (6) has a Josephson junction (10) in a control circuit in compensation mode, the signal processing device (7) is integrated adjoining the antenna (6) on the measuring tip (5) and a measuring signal-transmission link (8) for the measuring signal extends from the signal processing device (7) to a measuring unit (9), arranged remotely from the measuring tip (5), with a frequency which is selected in such a manner that the measuring signal can be transported through the measuring environment without significant disturbance, and wherein the microwave probe (1) is constructed for determining other measuring quantities, for example temperature, magnetic field, topography of the object (3), distance between object (3) and measuring tip (5), from the control signals of the signal processing device (7), the signal processing device (7) is constructed for the time-dependent extraction of electromagnetic signals from the object (3) and a transformation of the extracted signals into the frequency domain for detecting the frequency dependence of the signals is provided and the electromagnetic signals have a frequency of 30 THz at a maximum or 3 THz at a maximum.

2. The imaging microwave probe (1) as claimed in claim 1, **characterized in that** the electromagnetic signals are in the frequency range from 3 GHz to 300 THz.

3. The imaging microwave probe (1) as claimed in claim 2, **characterized in that** the electromagnetic signals have a frequency of at least 110 GHz.

4. The imaging microwave probe (1) as claimed in claim 2 or 3, **characterized in that**

5. The imaging microwave probe (1) as claimed in one of the preceding claims, **characterized in that** at least one antenna (6) is constructed as measurement pick-up tip for extracting electromagnetic signals from the object (3) to be examined.

6. The imaging microwave probe (1) as claimed in claim 5, **characterized in that** measurement pick-up tips are constructed to be directionally sensitive for detecting in each case one field component of the electrical or magnetic field in the near field of the object (3).

7. The imaging microwave probe (1) as claimed in one of the preceding claims, **characterized in that** at least one further antenna (6) is constructed for coupling electromagnetic signals into the object (3) to be examined.

8. The imaging microwave probe (1) as claimed in one of the preceding claims, **characterized in that** at least one further signal processing devices (7) is constructed as transmitter for generating electromagnetic signals and is electrically connected to at least one further antenna (6) for coupling the electromagnetic signals generated into the object (3) to be examined.

9. The imaging microwave probe (1) as claimed in one of the preceding claims, **characterized in that** the signal processing devices (7) have signal amplifiers (16) and/or an oscillator (13, 18) and/or a modulation device (12, 17) and/or a matching circuit (11, 15, 19).

10. The imaging microwave probe (1) as claimed in one of the preceding claims, **characterized in that** the signal processing devices (7) have means for detecting the phase of the detected signal.

11. The imaging microwave probe (1) as claimed in claim 7 or 8, **characterized in that** the signal processing device (7) has a selectable reference oscillator and a mixer electrically connected to the reference oscillator, in order to place the signal to be emitted or to be detected in reference with respect to a temporal reference signal of the reference oscillator with regard to the amplitude and/or phase of the signal.

12. The imaging microwave probe (1) as claimed in one of the preceding claims, **characterized in that** the microwave probe (1) is constructed for reflection measurement, emission measurement, absorption measurement or transmission measurement.

13. The imaging microwave probe (1) as claimed in one of the preceding claims, **characterized in that** the antenna (6) is constructed for the essentially capacitive, inductive or resistive coupling-in and/or out of the electromagnetic signals.

14. The imaging microwave probe (1) as claimed in one of the preceding claims, **characterized in that** at least one measurement pick-up for detecting other measuring quantities, for example temperature, magnetic field, topography of the object (3), distance between object (3) and measuring tip (5), is integrated in the measuring tip (5).

15. The imaging microwave probe (1) as claimed in one of the preceding claims, **characterized in that** the measuring tip (5) and the measuring arm (2) have shielding for interfering electrical and magnetic fields.

16. The imaging microwave probe (1) as claimed in one of the preceding claims, **characterized in that** a cooler is provided for cooling the antenna (6) in the measuring tip (5) and/or a cooler is provided for cooling the object (3).

17. The imaging microwave probe (1) as claimed in one of the preceding claims, **characterized in that** a heating element for heating the antenna (6) in the measuring tip (5) and/or a heating element for heating the object (3) is provided.

18. The imaging microwave probe (1) as claimed in one of the preceding claims, **characterized in that** the measuring-signal transmission link (8) is constructed to be line-connected or non-line-connected for transmitting the measuring signal and/or a reference signal of a reference oscillator.

19. The imaging microwave probe (1) as claimed in one of the preceding claims, **characterized in that** the microwave probe (1) is constructed for generating a relative mechanical vibration between the object (3) to be measured and the measuring tip (5), for the approach of object (3) and measuring tip (5) and for the detection of the distance between object (3) and measuring tip (5) in dependence on the damping of the vibration.

20. The imaging microwave probe (1) as claimed in one of the preceding claims, **characterized in that** the microwave probe (1) is constructed from the detected or emitted electromagnetic signals of the associated signal processing device (7) for determining the distance between object (3) and measuring tip (5) and control signals for the approach of the measuring tip (5) to the object (3).

21. A method for examining objects (3) by means of an imaging microwave probe (1) as claimed in one of the preceding claims, **characterized by** evaluation of the detected actual signals in conjunction with predetermined nominal signals and representation of the deviations between the detected actual signals and the predetermined nominal signals.

22. The method as claimed in claim 21, **characterized by** determination of the nominal signals by means of simulation calculations on the basis of known models or of models determined by examination, of the object (3) to be examined.

23. The method as claimed in claim 21 or 22, **characterized by** modeling the object (3) to be examined with the aid of a scalar or vectorial network analysis, wherein a multiplicity of spatially resolved concentrated equivalent circuits is determined and superimposed.

24. The method as claimed in one of claims 21 to 23, **characterized by** evaluation of the detected signals with the aid of a quantitative microscopy of the impedances by means of spatially resolved determination of the electrical and/or magnetic behavior of the object (3), for example for the determination of material properties.

25. The method as claimed in one of claims 21 to 34, **characterized by** additionally coupling laser light onto the measuring tip (5) for coupling in energy and/or reference signals and/or coupling in laser light onto the object (3) for reflection or transmission measurement.

## Revendications

1. Testeur micro-onde à formation d'image (1) destiné à l'examen tridimensionnel de circuits microélectroniques intégrés comprenant au moins une pointe de mesure (5) sur un bras de mesure (2), dans lequel au moins l'une des pointes de mesure (5) porte une antenne (6) destinée à détecter des signaux électromagnétiques et la pointe de mesure est sensiblement plus petite que la longueur d'onde en champ proche des signaux électromagnétiques, un dispositif de positionnement destiné à positionner un objet à mesurer (3) par rapport à la pointe de mesure (5) suivant au moins une dimension spatiale (X, Y, Z), comprenant un dispositif de traitement des signaux (7) électriquement connecté à l'antenne (6) pour convertir le signal de capteur de l'antenne (6) en un signal de mesure ayant une fréquence réduite de manière appropriée pour l'évaluation, dans lequel l'antenne (6) comporte au moins une jonction Josephson (10) dans un circuit de commande lors d'une opération de compensation, le dispositif de traitement des signaux (7) est intégré à la pointe de mesure (5) de manière adjacente à l'antenne (6) et une voie de transmission de signal de mesure (8) destinée au signal de mesure s'étend du dispositif de traitement des signaux (7) à une unité de mesure (9) disposée de manière éloignée de la pointe de mesure (5) avec une fréquence sélectionnée de manière à ce que le signal de mesure puisse être transporté sans perturbation notable à travers l'environnement de mesure, et le testeur micro-onde (1) est conçu pour obtenir d'autres grandeurs de mesure, par exemple la température, le champ magnétique, la topographie de l'objet (3), la distance entre l'objet (3) et la pointe de mesure (5), à partir des signaux de commande du dispositif de traitement des signaux (7), dans lequel le dispositif de traitement des signaux (7) est conçu pour extraire en fonction du temps des signaux électromagnétiques de l'objet (3) et une transformation des signaux extraits dans le domaine des fréquences est effectuée pour détecter la dépendance en fréquence des signaux, et dans lequel le dispositif de traitement des signaux (7) et l'au moins une antenne associée (6) sont intégrés sur une surface d'au plus 1 mm².

2. Testeur micro-onde à formation d'image (1) selon la revendication 1, **caractérisé en ce que** les signaux électromagnétiques se situent dans la plage de fréquences de 3 GHz à 300 THz.

3. Testeur micro-onde micro-onde à formation d'image (1) selon la revendication 2, **caractérisé en ce que** les signaux électromagnétiques ont une fréquence d'au moins 110 GHz.

4. Testeur micro-onde micro-onde à formation d'image (1) selon la revendication 2 ou 3, **caractérisé en ce que** les signaux électromagnétiques ont une fréquence d'au plus 30 THz ou d'au plus 3 THz.

5. Testeur micro-onde à formation d'image (1) selon l'une quelconque des revendications précédentes, **caractérisé en ce qu'**au moins une antenne (6) est conçue sous la forme d'une pointe d'acquisition de mesures destinée à l'extraction de signaux électromagnétiques de l'objet (3) à examiner.

6. Testeur micro-onde à formation d'image (1) selon la revendication 5, **caractérisé en ce que** les pointes d'acquisition de mesures sont conçues de manière à être sensibles à la direction pour détecter une composante de champ respective du champ électrique ou magnétique dans le champ proche de l'objet (3).

7. Testeur micro-onde à formation d'image (1) selon l'une quelconque des revendications précédentes, **caractérisé en ce qu'**au moins une antenne (6) supplémentaire est conçue de manière à injecter des signaux électromagnétiques dans l'objet (3) à examiner.

8. Testeur micro-onde à formation d'image (1) selon l'une quelconque des revendications précédentes, **caractérisé en ce qu'**au moins un dispositif de traitement des signaux (7) supplémentaire est conçu pour générer des signaux électromagnétiques et est électriquement connecté à au moins une antenne (6) supplémentaire destinée à injecter les signaux électromagnétiques générés dans l'objet (3) à examiner.

9. Testeur micro-onde à formation d'image (1) selon l'une quelconque des revendications précédentes, **caractérisé en ce que** les dispositifs de traitement des signaux (7) comportent des amplificateurs de signaux (16) et/ou un oscillateur (13, 18) et/ou un dispositif de modulation (12, 17) et/ou un circuit d'adaptation (11, 15, 19).

10. Testeur micro-onde à formation d'image (1) selon l'une quelconque des revendications précédentes, **caractérisé en ce que** les dispositifs de traitement des signaux (7) comportent des moyens destinés à détecter la phase du signal détecté.

11. Testeur micro-onde à formation d'image (1) selon la revendication 7 ou 8, **caractérisé en ce que** le dispositif de traitement des signaux (7) comporte un oscillateur de référence pouvant être commandé et un mélangeur électriquement connecté à l'oscillateur de référence pour régler le signal déterminé ou détecté en tenant compte de l'amplitude et/ou de la phase du signal en référence à un signal de référence temporel de l'oscillateur de référence.

12. Testeur micro-onde à formation d'image (1) selon l'une quelconque des revendications précédentes, **caractérisé en ce que** le testeur micro-onde (1) est conçu pour effectuer une mesure de réflexion, une mesure d'émission, une mesure d'absorption ou une mesure de transmission.

13. Testeur micro-onde à formation d'image (1) selon l'une quelconque des revendications précédentes, **caractérisé en ce que** l'antenne (6) est conçue pour effectuer une injection et/ou une extraction des signaux électromagnétiques de manière sensiblement capacitive, inductive ou résistive.

14. Testeur micro-onde à formation d'image (1) selon l'une quelconque des revendications précédentes, **caractérisé en ce qu'**au moins un capteur de mesure destiné à détecter d'autres grandeurs de mesure, par exemple une température, un champ magnétique, la topographie de l'objet (3), la distance entre l'objet (3) et la pointe de mesure (5), est intégré à la pointe de mesure (5).

15. Testeur micro-onde à formation d'image (1) selon l'une quelconque des revendications précédentes, **caractérisé en ce que** la pointe de mesure (5) et le bras de mesure (2) comportent un blindage contre les champs électriques et magnétiques parasites.

16. Testeur micro-onde à formation d'image (1) selon l'une quelconque des revendications précédentes, **caractérisé en ce qu'**un refroidisseur est prévu pour refroidir l'antenne (6) que comporte la pointe de mesure (5) et/ou **en ce qu'**un refroidisseur est prévu pour refroidir l'objet (3).

17. Testeur micro-onde à formation d'image (1) selon l'une quelconque des revendications précédentes, **caractérisé en ce qu'**un élément chauffant est prévu pour chauffer l'antenne (6) que comporte la pointe de mesure (5) et/ou **en ce qu'**un élément chauffant est prévu pour chauffer l'objet (3).

18. Testeur micro-onde à formation d'image (1) selon l'une quelconque des revendications précédentes, **caractérisé en ce que** la voie de transmission de signal de mesure (8) est conçue de manière à être connectée par câble ou à ne pas être connectée par câble pour la transmission du signal de mesure et/ou d'un signal de référence d'un oscillateur de référence.

19. Testeur micro-onde à formation d'image (1) selon l'une quelconque des revendications précédentes, **caractérisé en ce que** le testeur micro-onde (1) est conçu pour générer une oscillation mécanique relative entre l'objet à mesurer (3) et la pointe de mesure (5), pour rapprocher l'objet (3) de la pointe de mesure (5) et pour détecter la distance entre l'objet (3) et la pointe de mesure (5) en fonction de l'amortissement de l'oscillation.

20. Testeur micro-onde à formation d'image (1) selon l'une quelconque des revendications précédentes, **caractérisé en ce que** le testeur micro-onde (1) est conçu pour déterminer la distance entre l'objet (3) et la pointe de mesure (5) et des signaux de commande destinés au rapprochement de la pointe de mesure (5) de l'objet (3) à partir des signaux électromagnétiques détectés ou émis du dispositif de traitement des signaux (7) associé.

21. Procédé pour l'examen d'objets (3) au moyen d'un testeur micro-onde à formation d'image (1) selon l'une quelconque des revendications précédentes, **caractérisé par** l'évaluation des signaux effectivement détectés en association avec des signaux nominaux prédéterminés et par la représentation de l'écart entre les signaux effectivement détectés et les signaux nominaux prédéterminés.

22. Procédé selon la revendication 21, **caractérisé par** la détermination des signaux nominaux au moyen de calculs de simulation sur la base de modèles connus ou déterminés par examen de l'objet à examiner (3).

23. Procédé selon la revendication 21 ou 22, **caractérisé par** la modélisation de l'objet à examiner (3) à l'aide d'une analyse de réseau scalaire ou vectorielle, dans lequel une pluralité de circuits équivalents concentrés et résolus spatialement peuvent être déterminés et superposés.

24. Procédé selon l'une quelconque des revendications 21 à 23, **caractérisé par** l'évaluation des signaux détectés à l'aide d'une microscopie quantitative des impédances par détermination résolue spatialement du comportement électrique et/ou magnétique de l'objet (3), par exemple pour déterminer des propriétés de matériaux.

25. Procédé selon l'une quelconque des revendications 21 à 24, **caractérisé par** le fait d'injecter en outre de la lumière laser sur la pointe de mesure (5) pour injecter de l'énergie et/ou des signaux de référence et/ou pour injecter de la lumière laser dans l'objet (3) afin de mesurer la réflexion ou la transmission.
